# EUROPÄISCHE PATENTSCHRIFT

(11) **EP 0 438 769 B1**
(45) Veröffentlichungstag und Bekanntmachung des Hinweises auf die Patenterteilung: **30.11.1994**
(21) Anmeldenummer: 90125329.4
(22) Anmeldetag: 22.12.1990
(51) Int. Cl.: H02B 13/035

(54) **Einrichtung und Verfahren zur Verbindung von in getrennten Gehäusen untergebrachten gasisolierten Schaltanlagen**
Apparatus and method for connecting gas insulated switchgear contained in separate casings
Dispositif et procédé pour la connexion d'installations de commutation à isolement gazeux placés dans des boîtiers séparés

(30) Priorität: 24.01.1990 DE 4001909
(43) Veröffentlichungstag der Anmeldung: 31.07.1991
(73) Patentinhaber: AEG Sachsenwerk GmbH, D-93053 Regensburg (DE)
(72) Erfinder: Stegmüller, Karl, Dipl.-Ing., W-8401 Wiesent (DE)
(74) Vertreter: Dreiss, Fuhlendorf, Steimle & Becker

(56) Entgegenhaltungen:
- DE-U- 7 729 866
- FR-A- 1 308 183
- FR-A- 2 115 319

## Beschreibung

Die Erfindung betrifft eine Einrichtung zur Verbindung von in getrennten Gehäusen untergebrachten gasisolierten Schaltanlagen nach dem Oberbegriff des 1. Patentanspruchs. Die Erfindung soll hauptsächlich zur Anreihung von mehrfeldigen Lastschalteranlagen angewendet werden. Solche Schaltanlagen werden vorzugsweise in Netztransformatorstationen eingesetzt, wobei in einem Gehäuse in der Regel zwei Felder für den Anschluß eines Kabel- oder Leitungsringes und ein oder zwei Felder mit HH-Sicherungen für je einen mit einem Transformator bestückten Abzweig vorgesehen sind. Die genannten Lastschaltanlagen weisen gelegentlich z. b. in Abnehmerstationen auch mehr als vier Felder in verschiedenartigen Bestückungskombinationen auf. So ist in der Druckschrift Nr. 13 89/H von Calor Emag, "Metallgekapselte, SF6-isolierte Schaltanlagen für Ortsnetz-Verteilerstationen Typenreihe ZL4" u. a. die Erweiterbarkeit einer dreifeldigen Schalteinheit ZL4.2 um ein oder mehrere Einzelschaltfelder ZL4.1 zu erkennen.

Aus der Programmübersicht, Bestellnummer A 19100- E 139 B 391 von Siemens "SF6-isolierte Lastschaltanlage 8DJ10" sind darüberhinaus Kombinationen von zwei Lastschaltanlagen bekannt, die zu einem Block aneinander gereiht sind und in deren Kombination bis zu sieben Schaltfelder untergebracht sind. Die angegebenen Lösungen zur Erweiterung bereits bestehender Anlagen sehen bei der letztgenannten Baureihe den Austausch der vollständigen, zusammengebauten Schaltanlagen vor. Bei der Baureihe ZL4 ist aus den Bildern erkennbar, daß lediglich die Anreihung einzelner Felder des Typs ZL4.1 vorgesehen ist. Wegen der hohen Abschlußdeckel und der Ausführung der Sammelschienenendteile bedeutet eine Anreihung hier eine zeitaufwendige Arbeit, da wegen des beinah die ganze Höhe der Schaltanlage überdeckenden Abschlußdeckels das ganze Gas entweicht und vor Wiederinbetriebnahme zur Gänze neu aufgefüllt werden muß.

Eine Verbindungsvorrichtung nach dem Oberbegriff des 1. Patentanspruchs ist durch die Druckschrift DE-35 15 421 A1 bekanntgeworden. An den zu verbindenden Seiten zweier Schaltanlagen sind mit Außenkonen versehene Durchführungen für die verlängerten Sammelschienen angebaut, wobei letztere außerhalb der Durchführungen mittels einer Stecker-Buchse-Kupplung eine leitende Verbindung eingehen. Die Steckverbindung ist durch ein Isolierteil umgeben, das sich formschlüssig mit den Außenkonen der Durchführungen verbindet. Die bekannte Verbindungsvorrichtung ist sehr aufwendig ausgeführt. Ihr Einsatz ist darüberhinaus wegen der Durchführung und der sie durchdringenden Sammelschienenverlängerung nur dort sinnvoll, wo die Aneinanderreihung zweier oder mehrerer Schaltanlagen bereits bei Auftragserteilung bekannt ist. Für die fallweise nachträgliche Erweiterung bereits im Einsatz befindlicher Schaltanlagen ist die bekannte Vorrichtung nicht geeignet, da in einem solchen Fall die Anlagen von Anfang an mit den Durchführungen und einer Isolierung der letztere durchdringenden Sammelschienen auszurüsten wären. Darüberhinaus ist die vorgesehene, die Steckerverbindung umgebende Feststoffisolation nicht berührungssicher; die bekannte Verbindungsvorrichtung müßte also zusätzlich mit einer metallischen Abdeckung versehen werden.

Die Aufgabe der Erfindung wird darin gesehen, gasisolierte Schaltanlagen der eingangs genannten Art derart auszurüsten, daß an eine in Betrieb befindliche Schaltanlage herkömmlicher Ausführung in einem einfachen Verfahren nach kurzer Betriebsunterbrechung ein oder mehrere Schaltanlagen angereiht werden können und dabei eine durchgehende Metallkapselung aufrechterhalten bleibt.

Die Lösung der gestellten Aufgabe wird durch die Merkmale im Kennzeichen des ersten Patentanspruchs erreicht. Die Vorteile der Erfindung bestehen darin, daß jede Schaltanlage bei ihrer Herstellung in ökonomischer Weise mit einer Anreihmöglichkeit für Sammelschienen und Kapselungen ausrüstbar ist, ohne daß sich dadurch die Gehäuseabmessungen vergrößern und ohne daß spannungsführende Teile die Kapselung durchdringen. Soll eine so ausgeführte Schaltanlage durch Anreihung einer zweiten erweitert werden, so ist dies nach Freischaltung und Erdung derselben in kurzer Zeit möglich, wobei nach der Inbetriebnahme an der Verbindungstelle derselbe Berührungsschutz herrscht wie an der Kapselung der verbundenen Schaltanlagen.

Vorteilhafte Weiterbildungen des Erfindungsgedankens sind den Unteransprüchen zu entnehmen; in einem der Unteransprüche sind darüberhinaus die bei der Einrichtung der erfindungsgemäßen Verbindung erforderlichen Verfahrensschritte angegeben.

Die Erfindung läßt sich anhand der folgenden Zeichnungen erläutern:
Fig.1 Schnittdarstellung einer Verbindung zwischen zwei gasisolierten Schaltanlagen in achsengleicher Ausführung der Sammelschienen,
Fig. 2 Schnittdarstellung einer gasisolierten Schaltanlage; Sammelschienenabschluß im Betriebszustand vor der Verbindung mit einer zweiten Schaltanlage,
Fig.3a Steckkupplung mit balligem Steckerstift,
Fig.3b Steckkupplung mit balligem Kontaktelementen,
Fig.4 zwei miteinander verbundene Schaltanlagen mit achsengleicher Kupplung,
Fig.5 zwei miteinander verbundene Schaltanlagen mit ausgekreuzter Kupplung,
Fig.6 Verbindung zweier Rücken an Rücken stehender Schaltanlagen.

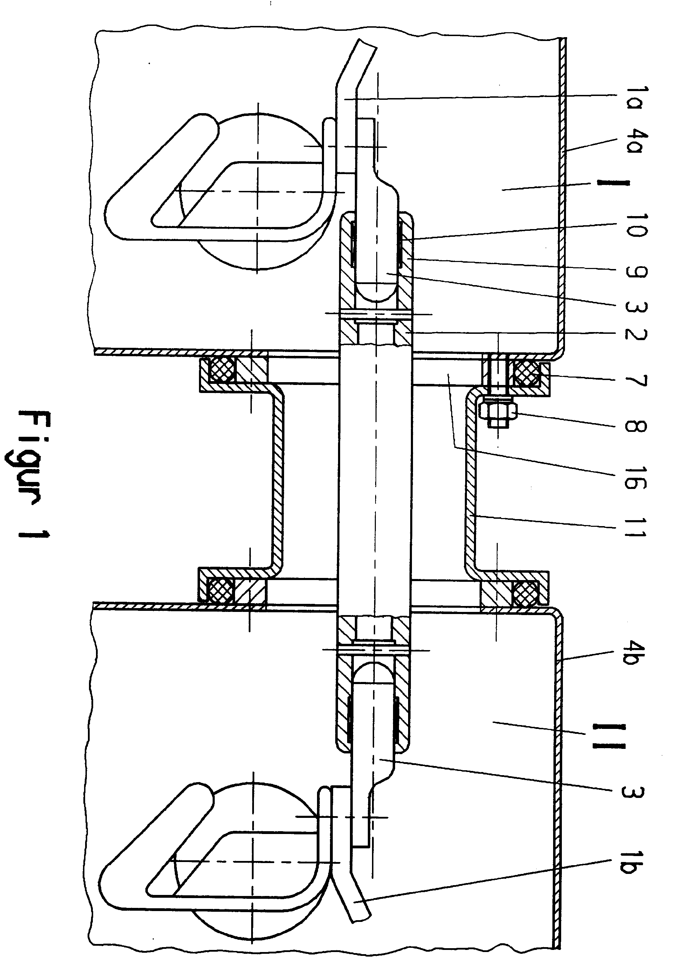

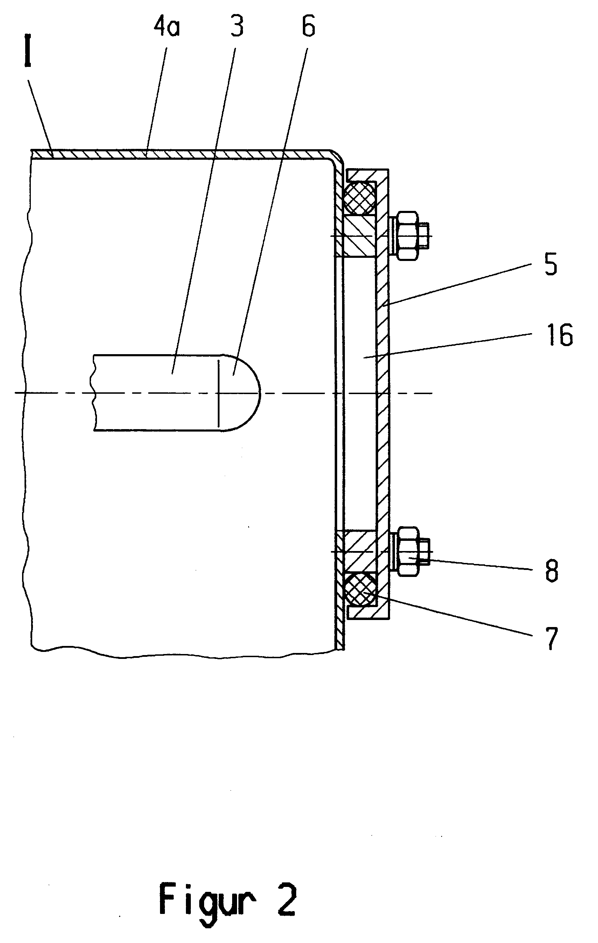

In Fig. 1 ist das rechte Ende der Sammelschiene 1a der Schaltanlage I und das linke Ende der Sammelschiene 1b der Schaltanlage II durch ein achsengleiches Kupplungstück 2 miteinander verbunden. Damit die Kupplung der Sammelschienen bei einer Schaltanlagenerweiterung am Einsatzort ohne großen Zeitbedarf vor sich gehen kann, ist jede der Sammelschienen mit einem Steckerstift 3 ausgerüstet. In Fig. 2 ist dabei ersichtlich, daß der Steckersift 3 im Betriebszustand einer einzigen Schaltanlage I so in deren Gehäuse 4a eingebaut ist, daß er gegenüber dem gasdicht angebauten Abschlußdeckel 5 eine kalottenförmige Spitze 6 aufweist. Durch diese Ausbildung des Abschlusses des Steckerstifts 3 ist an demselben eine unter der Glimmeinsatzspannung bleibende elektrische Feldstärke im Betrieb sichergestellt. Die gewölbte Elektrodenform verhindert außerdem elektrische Durchschläge bei Anlegen der Prüfspannungen. Der Abschluß 5 ist durch eine Reihe von Schraubverbindungen 8 unter Verwendung einer Ringdichtung 7 gasdicht mit dem Gehäuse 4a verbunden. Das Kupplungsstück 2 trägt erfindungsgemäß an seinen beiden Enden Steckerbuchsen 9, die vorzugsweise mit Kontaktlamellen 10 ausgerüstet sind. Letztere stellen den Kontaktübergang zwischen Steckerstift 3 und Kupplungstück 2 her. Das Kupplungsrohr ist im zusammengebauten Zustand im Zwischenraum zwischen den beiden Schaltanlagen I und II durch eine metallisches Verbindungsstück 11 abgedeckt, welches gasdicht mit der bereits vorhandenen Verschraubung 8 unter Beilage der Ringdichtung 7 mit den beiden Gehäusen 4a bzw. 4b verbunden ist. Auf diese Weise ist sichergestellt, daß das in den Schaltanlagen I bzw. II vorhandene Isoliergas, vorzugsweise ein Gas-Luft-Gemisch auch die Isolierung des Kupplungstücks 2 gegenüber dem Verbindungstück 11 übernimmt. Andererseits wirkt das Verbindungstück 11 in dem in Fig. 1 dargestellten Zustand wie ein metallische Kapselung, da es die Metallgehäuse 4a und 4b der beiden Schaltanlagen lückenlos miteinander verbindet. Auf diese Weise ergibt die Kombination der beiden Schaltanlagen I und II mit der erfindungsgemäßen Verbindung denselbe Berührungsschutz, nämlich eine geerdetes metallisches Gehäuse.

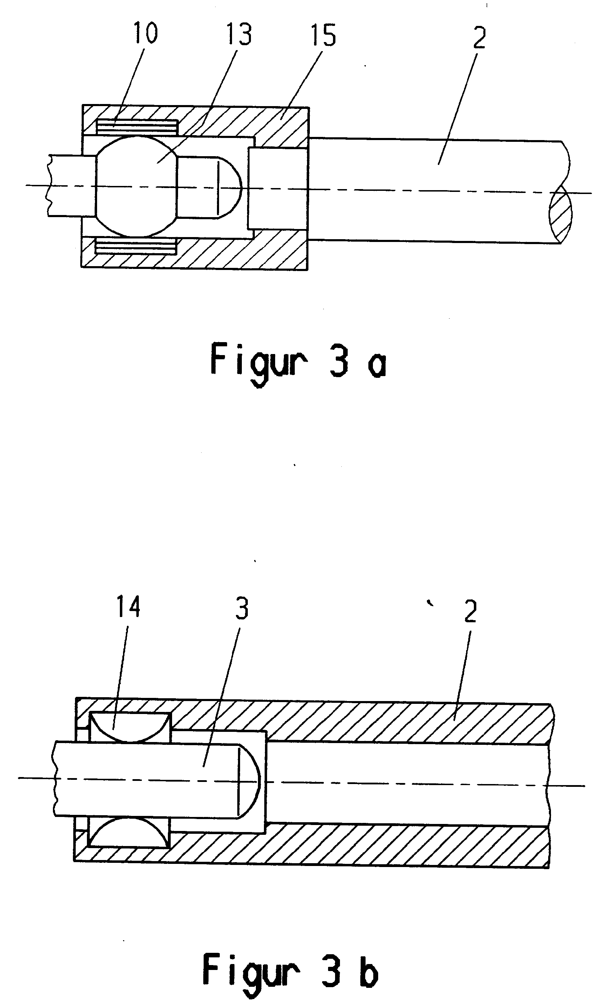

Zur Verbindung der beiden Schaltanlagen I und II, bei der ja im Normalfall nicht nur eine Sammelschiene, sondern die Sammelschienen aller drei Phasen miteinander zu kuppeln sind, läßt sich ein achsengleiches Ausrichten der Schienen nur unter sehr großen Aufwand erreichen. Aus diesem Grund sind nach einem weiteren Merkmal der Erfindung die Steckverbindungen so ausgeführt, daß geringfügige Abweichungen von der Achsengleichheit räumlich durch eine entsprechende Ausbildung der Steckkontakte ausgeglichen werden können. In Fig. 3a ist hierzu ein wulstartig ausgebildeter Steckerstift 13 gezeigt, der mit den Kontaktlamellen 10 zusammenarbeitet. Um eine ökonomische Ausbildung der Kupplung zwischen den beiden Sammelschienen zu erreichen, kann als Lamellenträger ein Teil größeren Durchmessers verwendet werden, in das das eigentliche Kupplungstück 2 mit einem abgesetzten Ende z. B. durch Hartlötung eingesetzt ist. In Fig. 3b ist eine Kupplung gezeigt, bei der der zylindrische Steckerstift 3 mit speziellen bogenförmig ausgebildeten Kontaktlamellen 14 in Berührung ist. Beide in den Fig. 3a und 3b gezeigten Steckverbindungen lassen an der Verbindungsstelle eine Winkelabweichung zwischen den Achsen der Sammelschiene und des Kupplungsstückes zu. Da die erfindungsgemäße Kupplung pro Sammelschienenverbindung zwei Steckkontakte trägt, läßt sich mit ihr ohne Schwierigkeiten auch eine Verbindung bei sich kreuzenden oder parallel zueinander stehenden Sammelschienenachsen der beiden Schaltanlagen I und II erreichen.

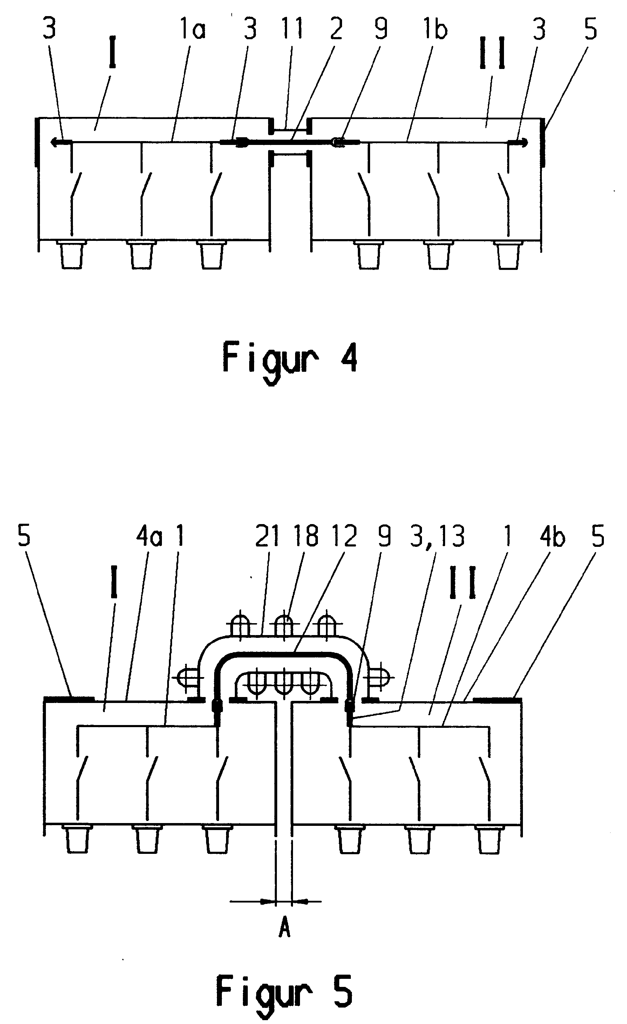

Mit den dargestellten Kupplungselementen für die Sammelschienen lassen sich zwei miteinander zu verbindende Schaltanlagen in verschiedener Weise unter Ausnutzung unterschiedlicher Vorteile miteinander verbinden. Nach Fig. 4 erfolgt die bereits ausgeführlicher beschriebene Verbindung von zwei Schaltanlagen I und II, die in der Darstellung jeweils drei Schaltfelder besitzen, wie schon ausführlicher beschrieben. In Fig. 5 ist die Aneinanderreihung von zwei Schaltanlagen I und II dargestellt, bei denen die Steckerstifte 3 bzw. 13 im rechten Winkel nach oben stehen und das Kupplungstück 12 in Form eines U-förmigen Leiters ausgebildet ist, das an beiden Enden Steckerbuchsen 9 angesetzt hat. Das die Kupplungstücke 12 umgebende Verbindungstück 21 ist wegen der U-förmigen Gestalt derselben zweiteilig ausgeführt, wobei die beiden Teile durch Schraubverbindungen 18 zusammengehalten werden. Das Verbindungstück 21 umgibt die Kupplungstücke 12 gasdicht und ist als ganzes gasdicht mit den Gehäuses 4a bzw. 4b der Schaltanlagen I bzw. II verbunden. Die in Fig. 5 dargestellte Verbindung gestattet in Schaltanlagenräumen mit kleiner Grundfläche eine Minimierung des Abstandes A der miteinander zu verbindenden Schaltanlagen.

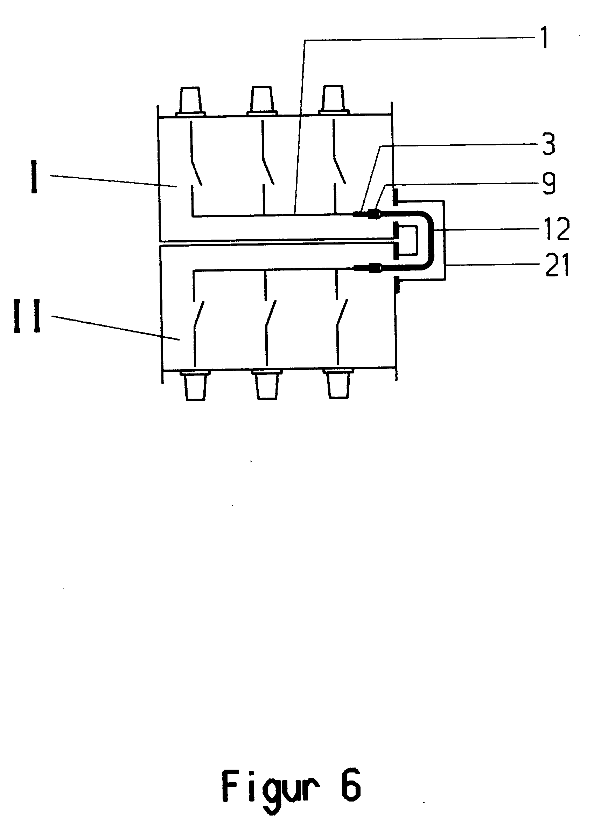

Mit der in Fig. 6 dargestellten Verbindungstechnik lassen sich auch vorteilhaft zwei Rücken an Rücken stehende Schaltanlagen I bzw. II aneinander anreihen. Die Steckerstifte 3 bzw. 13 haben dabei wie in Fig. 1 mit den Sammelschienen 1 achsengleiche Ausrichtung. Das Kupplungstück 12 ist wie bereits bei Fig. 5 dargestellt von U-förmiger Gestalt und von einem geteilten Verbindungstück 21 umgeben. Auch mit dieser Anordnung lassen sich Schaltanlagenerweiterungen bei ganz bestimmten räumlich beschränkten Verhältnissen wirkungsvoll erzielen.

Als besonderer Vorteil der Erfindung ist anzusehen, daß jede Schaltanlage für eine spätere, universelle Anreihung vorbereitet werden kann. Sie erhält dazu an beiden Sammelschienenenden von Anfang an einen Steckerstift 3 in jeder Phase und im Gehäuse 4a bzw. 4b eine Öffnung, die durch einen Abschlußdeckel 5 gasdicht verschlossen ist. In dieser Form ist die Schaltanlage bei Beibehaltung ihrer Grundabmessungen voll betriebsfähig und rundum metallgekapselt. Eine solche Schaltanlage kann für sich aus drei Lastschaltfeldern oder auch aus einer größeren Anzahl bestehen. Im Falle der Anreihung einer zweiten Schaltanlage wird nach einem weiteren Merkmal der Erfindung nach herstellen eines Druckausgleichs zwischen dem Isoliergas und der umgebenden Atmosphäre, sowie nach Abschalten und Erden der Schaltanlage der Verschlußdeckel 5 entfernt. Dabei entweicht im Oberteil der Schaltanlage, d. h. im Raum der Sammelschiene 1 das dort befindliche Gas nach außen.

Die in gleicher Weise vorbereitete Schaltanlage II wird mit den drei Kupplungstücken 2 versehen, über die das Verbindungstück 11 geschoben und mit der Schaltanlage II abdichtend verschraubt wird. (Siehe Fig. 1). Die so vorbereitete Schaltanlage II wird nun an die Schaltanlage I herangeschoben und nach Einführung der Kupplungstücke 2 auf die Steckerstifte 3 mit letzterer verbunden. Dazu wird nach Erreichen der Endposition das Verbindungstück 11 nun auch unter Beilegung der Ringdichtung 7 mit dem Gehäuse 4a der Schaltanlage I verschraubt. Anschließend wird die Schaltanlagenkombination wieder auf den Betriebsdruck gebracht. Da die Zeit, in der beide Schaltanlagen geöffnet sind, sehr kurz ist, braucht ein Eindringen von Feuchtigkeit oder Staub in gefährlichem Maße nicht befürchtet zu werden. Das entwichene Gas ist durch Luft ersetzt worden, was nach den Ergebnissen vieler Versuchsreihen bis zu einem Mischungsverhältnis von SF6 zu Luft von 70 zu 30 keine Absenkung des Isoliervermögens bedeutet. Die in der beschriebenen Weise miteinander verbundenen Schaltanlagen sind, sofern der Verbindungsvorgang in einem normalen Innenraumklima stattgefunden hat, sofort wieder voll betriebsfähig.

## Patentansprüche

1. Einrichtung zur Verbindung von in getrennten Gehäusen (4a,4b) untergebrachten gasisolierten Schaltanlagen (I,II) mit durch zweiteilige Steckkontakte (3,9) phasenweise kuppelbare Sammelschienen (1a,1b), für die in jedem Gehäuse (4a,4b) Austrittsöffnungen (16) angebracht sind und deren Kuppelleitungen (2,12) mit einer Isolation umgeben sind, dadurch gekennzeichnet, daß in jeder Schaltanlage (I,II) für die Sammelschienen (1a,1b) jeweils ein Steckkontaktteil (3,13,9) innerhalb des Gehäuses (4a,4b) eingebaut und durch einen die Austrittsöffnung (16) verschließenden, während des Verbindungsvorgangs der Schaltanlagen (I,II) abnehmbaren Deckel (5) abgedeckt ist, und daß die Kuppelleitungen (2,12) von einem mit Isoliergas gefüllten, die Austrittsöffnungen (16) der zu verbindenden Schaltanlagen (I,II) verschließenden Verbindungsstück (11,21) gekapselt sind.

2. Einrichtung zur Verbindung von gasisolierten Schaltanlagen nach Patentanspruch 1, dadurch gekennzeichnet, daß die Steckkontakte (3,9) in Verlängerung der Sammelschienen (1a,1b) angeordnet sind und mit annähernd achsengleichen, geraden Kupplungsstücken (2) zusammenwirken.

3. Einrichtung zur Verbindung von gasisolierten Schaltanlagen nach Patentanspruch 1, dadurch gekennzeichnet, daß die Steckkontakte (3,9) senkrecht zur Achse der Sammelschienen (1a,1b) angeordnet sind und mit U-förmigen Kupplungsstücken (12) zusammenwirken.

4. Einrichtung zur Verbindung von gasisolierten Schaltanlagen nach Patentanspruch 2 oder 3, dadurch gekennzeichnet, daß die Sammelschienen (1a,1b) durch Steckerstifte (3) und die Kupplungstücke (2,12) durch Steckerbuchsen (9) abgeschlossen sind.

5. Einrichtung zur Verbindung von gasisolierten Schaltanlagen nach Patentanspruch 2 oder 3, dadurch gekennzeichnet, daß die Sammelschienen (1a,1b) durch Steckerbuchsen (9) und die Kupplungstücke (2,12) durch Steckerstifte (3) abgeschlossen sind.

6. Einrichtung zur Verbindung von gasisolierten Schaltanlagen nach Patentanspruch 4 oder 5, dadurch gekennzeichnet, daß die Steckerstifte (13) eine mit Kontaktlamellen (10) zusammenwirkende ballige Kontaktfläche in Form von vorzugsweise einer Kugelfläche aufweisen.

7. Einrichtung zur Verbindung von gasisolierten Schaltanlagen nach Patentanspruch 4 oder 5, dadurch gekennzeichnet, daß die zylindrischen Steckerstifte (3) mit Steckerbuchsen zusammenwirken, die mit bogenförmigen Lamellen (14) bestückt sind.

8. Einrichtung zur Verbindung von gasisolierten Schaltanlagen nach Patentanspruch 4, dadurch gekennzeichnet, daß die Steckerstifte (3,13) eine abgerundete Spitze (6) vorzugsweise in Form einer Halbkugel aufweisen.

9. Einrichtung zur Verbindung von gasisolierten Schaltanlagen nach einem der Patentansprüche 1, 2 oder 4 bis 8, dadurch gekennzeichnet, daß das Verbindungstück (11) ein beidseitig mit Flanschen versehener Metallzylinder ist, der an den Befestigungs- und Dichtungsstellen des Deckels (5) an die Gehäuse (4a,4b) anbaubar ist.

10. Einrichtung zur Verbindung von in gasisolierten Schaltanlagen nach einem der Patentansprüche 1, 3 oder 4 bis 8, dadurch gekennzeichnet, daß das Verbindungstück (21) aus zwei in der Längsachse geteilten und vorzugsweise durch Schraubverbindungen (18) gefügten U-förmigen Hälften zusammengesetzt ist, wobei das Verbindungsstück (21) an den Befestigungs- und Dichtungsstellen des Deckels (5) an die Gehäuse (4a,4b) anbaubar ist.

11. Verfahren zur Verbindung von in getrennten Gehäusen untergebrachten gasisolierten Schaltanlagen nach Patentanspruch 1 oder einem der folgenden, gekennzeichnet durch die folgenden Verfahrensschritte:
a) Abnehmen des die Austrittsöffnung (16) abschließenden Deckels (5) der anzureihenden Schaltanlage (II) nach Reduzierung des Betriebsdrucks auf den Luftdruck der Umgebung,
b) Einsetzen der Kupplungstücke (2,12) auf die Steckkontakte (3,13) der Schaltanlage (II) und Befestigung des Verbindungstücks (11,21) an dieser Anlage (II),
c) Abbau des Deckels (5) von der Schaltanlage (I) nach deren Abschaltung und Erdung, sowie nach Reduzierung des Betriebsdrucks auf den Luftdruck der Umgebung,
d) Kuppeln der Sammelschienen (1a,1b) durch Verbinden der Steckkontakte (3,13,9) in Schaltanlage (I) und Befestigung des Verbindungsstücks (11,21) mit dem Gehäuse (4a) der Schaltanlage (I) und
e) Inbetriebnahme der verbundenen Schaltanlagen (I,II) nach Auffüllen des Isoliergases auf den Betriebsdruck.

## Claims

1. An apparatus for connecting gas-insulated switchgear assemblies contained in separate casings with busbars, connectable in phase by two-part plug-in contacts, for which exit openings are provided in each casing and the interconnection lines of which are surrounded by insulation, characterised in that, in each switchgear assembly (I, II), a plug-in contact part (3, 13, 9) for each of the busbars (1a, 1b) is installed inside the casing (4a, 4b) and is covered by a cover (5), closing the exit opening (16), which is removable during the operation for connecting the switchgear assemblies (I, II), and that the interconnection lines (2, 12) are encapsulated by a connecting piece (11, 21) filled with an insulating gas, closing the exit openings (16) of the switchgear assemblies (I, II) to be connected.

2. An apparatus for connecting gas-insulated switchgear assemblies according to claim 1, characterised in that the plug-in contacts (3, 9) are arranged in the extension of the busbars (1a, 1b) and cooperate with straight coupling pieces (2) with approximately identical axes.

3. An apparatus for connecting gas-insulated switchgear assemblies according to claim 1, characterised in that the plug-in contacts (3, 9) are arranged perpendicular to the axis of the busbars (1a, 1b) and cooperate with U-shaped coupling pieces (12).

4. An apparatus for connecting gas-insulated switchgear assemblies according to claim 2 or 3, characterised in that the busbars (1a, 1b) are terminated by plug contact pins (3) and the coupling pieces (2, 12) are terminated by connector sockets (9).

5. An apparatus for connecting gas-insulated switchgear assemblies according to claim 2 or 3, characterised in that the busbars (1a, 1b) are terminated by connector sockets (9) and the coupling pieces (2, 12) are terminated by plug contact pins (3).

6. An apparatus for connecting gas-insulated switchgear assemblies according to claim 4 or 5, characterised in that the plug contact pins (13) have a convex contact surface, preferentially in the form of a spherical surface, cooperating with contact laminations (10).

7. An apparatus for connecting gas-insulated switchgear assemblies according to claim 4 or 5, characterised in that the cylindrical plug contact pins (3) cooperate with connector sockets which are equipped with arc-shaped laminations (14).

8. An apparatus for connecting gas-insulated switchgear assemblies according to claim 4, characterised in that the plug contact pins (3, 13) have a rounded tip (6), preferentially in the form of a hemisphere.

9. An apparatus for connecting gas-insulated switchgear assemblies according to one of claims 1, 2 or 4 to 8, characterised in that the connecting piece (11) is a metal cylinder provided with flanges at both ends, which is attachable to the points at which the cover (5) is fixed and sealed to the casing (4a, 4b).

10. An apparatus for connecting gas-insulated switchgear assemblies according to one of claims 1, 3 or 4 to 8, characterised in that the connecting piece (21) is composed of two U-shaped halves which are divided in the longitudinal axis and preferentially joined by screw connections (18), wherein the connecting piece (21) is attachable to the points at which the cover (5) is fixed and sealed to the casing (4a, 4b).

11. A method of connecting gas-insulated switchgear assemblies contained in separate casings according to claim 1 or one of the following claims, characterised by the following steps of the method:
a) removal of the cover (5) sealing the exit opening (16) of the switchgear assembly (II) to be connected in series after reduction of the operating pressure to the ambient air pressure,
b) placing of the coupling pieces (2, 12) on the plug-in contacts (3, 13) of the switchgear assembly (II) and fixing of the connecting piece (11, 21) to said assembly (II),
c) removal of the cover (5) from the switchgear assembly (I) after it has been disconnected and earthed, and after reduction of the operating pressure to the ambient air pressure,
d) coupling of the busbars (1a, 1b) by connecting the plug-in contacts (3, 13, 9) to the switchgear assembly (I) and fixing of the connecting piece (11, 21) to the casing (4a) of the switchgear assembly (I) and
e) start-up of the connected switchgear assemblies (I, II) after filling the insulating gas to the operating pressure.

## Revendications

1. Dispositif pour la connexion d'installations de distribution isolées au gaz, placées dans des boîtiers séparés avec des barres omnibus pouvant étre couplées par phase au moyen de contacts à fiches en deux parties, barres pour lesquelles sont ménagés, dans chaque boîtier, des orifices de sortie et dont les lignes de couplage sont entourées par une isolation, caractérisé en ce que dans chaque installation de distribution (I, II) pour les barres omnibus (1a, 1b), il est encastré à chaque fois à l'intérieur du boîtier (4a, 4b) un élément de contact à fiches (3, 13, 9) qui est recouvert par un couvercle (5) fermant l'orifice de sortie (16) et amovible pendant l'opération de connexion des installations de distribution (I, II) et en ce que les lignes de couplage (2, 12) sont blindées par un élément de jonction (11, 21) remplit de gaz isolant et fermant les orifices de sortie (16) des installations de distribution (I, II) à relier.

2. Dispositif pour la connexion d'installations de distribution isolées au gaz selon la revendication 1, caractérisé en ce que les contacts à fiches (3, 9) sont disposés dans le prolongement des barres omnibus (1a, 1b) et coopèrent avec des éléments de couplage (2) droits et approximativement équi-axiaux.

3. Dispositif pour la connexion d'installations de distribution isolées au gaz selon la revendication 1, caractérisé en ce que les contacts à fiches (3, 9) sont disposés perpendiculairement à l'axe des barres omnibus (1a, 1b) et coopérent avec des éléments de couplage (12) en forme de U.

4. Dispositif pour la connexion d'installations de distribution isolées au gaz selon la revendication 2 ou 3, caractérisé en ce que les barres omnibus (1a, 1b) sont terminées par des fiches (3) et les éléments de couplage (2, 12) par des douilles (9).

5. Dispositif pour la connexion d'installations de distribution isolées au gaz selon la revendication 2 ou 3, caractérisé en ce que les barres omnibus (1a, 1b) sont terminées par des douilles (9) et les éléments de couplage (2, 12) par des fiches (3).

6. Dispositif pour la connexion d'installations de distribution isolées au gaz selon la revendication 4 ou 5, caractérisé en ce que les fiches (13) présentent une surface de contact bombée coopérant avec des lamelles de contact (10) et, ce, de préférence sous forme d'une surface sphérique.

7. Dispositif pour la connexion d'installations de distribution isolées au gaz selon la revendication 4 ou 5, caractérisé en ce que les fiches cylindriques (3) coopèrent avec des douilles qui sont garnies de lamelles arquées (14).

8. Dispositif pour la connexion d'installations de distribution isolées au gaz selon la revendication 4, caractérisé en ce que les fiches (3, 13) présentent une pointe arrondie (6) ayant, de préférence, la forme d'une demi-sphère.

9. Dispositif pour la connexion d'installations de distribution isolées aux gaz selon l'une des revendications 1, 2 ou 4 à 8, caractérisé en ce que l'élément de liaison (11) est un cylindre métallique muni aux deux extrémités de brides, cylindre qui est montable aux points de fixation et d'étanchéité du couvercle (5) sur les boîtiers (4a, 4b).

10. Dispositif pour la connexion d'installations de distribution isolées aux gaz selon l'une des revendications 1, 3 ou 4 à 8, caractérisé en ce que l'élément de liaison (21) se compose de deux moitiés séparées dans l'axe longitudinal et de préférence jointes en forme de U par des raccords vissés (18), l'élément de connexion (21) étant montable aux points de fixation et d'étanchéité du couvercle (5) sur le boîtier (4a, 4b).

11. Procédé pour la connexion d'installations de distribution isolées au gaz placées dans des boîtiers séparés selon la revendication 1 ou l'une des suivantes, caractérisé par les étapes de procédé suivantes:
a) retrait du couvercle (5) fermant l'orifice de sortie (16) de l'installation de distribution (II) à joindre après réduction de la pression de travail à la pression de l'air ambiant.
b) insertion des éléments de couplage (2, 12) sur les contacts à fiches (3, 13) de l'installation de distribution (II) à joindre et fixation de l'élément de connexion (11, 21) sur cette installation (II),
c) démontage du couvercle (5) de l'installation de distribution (I) après l'arrêt de cette dernière et sa mise à la terre, ainsi qu'après réduction de la pression de travail à la pression de l'air ambiant,
d) couplage des barres omnibus (1a, 1b) par liaison des contacts à fiches (3, 13, 9) dans l'installation de distribution (I) et fixation de l'élément de liaison (11, 21) sur le boîtier (4a) de l'installation de distribution (I) et
e) mise en service des installations de distribution connectées (I, II) après remplissage du gaz isolant à la pression de travail.
